# EUROPEAN PATENT APPLICATION

(11) **EP 2 026 498 A1**
(43) Date of publication of application: **18.02.2009**
(21) Application number: 07785227.5
(22) Date of filing: 01.08.2007
(51) Int. Cl.: H04L 12/16

(54) **METHOD FOR IMPLEMENTING SEARCHING FOR USERS ONLINE AND SYSTEM THEREOF**

(30) Priority: 31.10.2006 CN 200610137938
(71) Applicant: Huawei Technologies Co., Ltd., Longgang District, Shenzhen Guangdong 518129 (CN)
(72) Inventor: HE, Qin, Shenzhen Guangdong 518129 (CN); ZHANG, Quan, Shenzhen Guangdong 518129 (CN)
(74) Representative: Thun, Clemens
(86) International application number: PCT/CN2007/002313
(87) International publication number: WO 2008/052409

(57) **Abstract**

The invention discloses a method and system for searching for online users. A storage unit is set for an SP, and adapted to store the basic information and status information of users. Thus, after receiving an online user search request that carries search conditions from an XDMC, the SP can determine online users meeting the search conditions according to the basic information and status information of users in the storage unit, and send search results that carry the basic information of the online users to the XDMC. The storage unit may be set for the SP or shared by the SP and the XDMS. Because the storage unit set for the SP stores the basic information and status information of users, the SP does not need to interact with the PS to obtain the status information of users and or interact with the XDMS to obtain the basic information of users after receiving an online user search request from the XDMC. This greatly reduces the frequency of communications between communication entities and the communication burden of each communication entity, and increases the response speed of the XDMC.

## Description

### Field of the Invention

The present invention relates to data communications, and in particular, to a method and system for searching for online users.

### Background of the Invention

The Open Mobile Alliance (OMA) proposes a search proxy (SP) but only provides the definition and function of the SP in the specifications for XML document management servers (XDMS). Herein, XML stands for extensible markup language. According to the specifications, the SP is responsible for searching for documents, and needs to perform the following functions: receiving a search request from an XML document management client (XDMC); parsing the search request and forwarding the search request to the local XDMS or XDMS in other networks; and collecting the reply information of all the XDMSs, combining and filtering the reply information, and then sending it to the XDMC. The XDMC may be a user equipment (UE) or other clients with the XML document management function.

The SP can search for documents and online users. Several schemes for searching for online users are described as follows in the prior art.

### Scheme 1

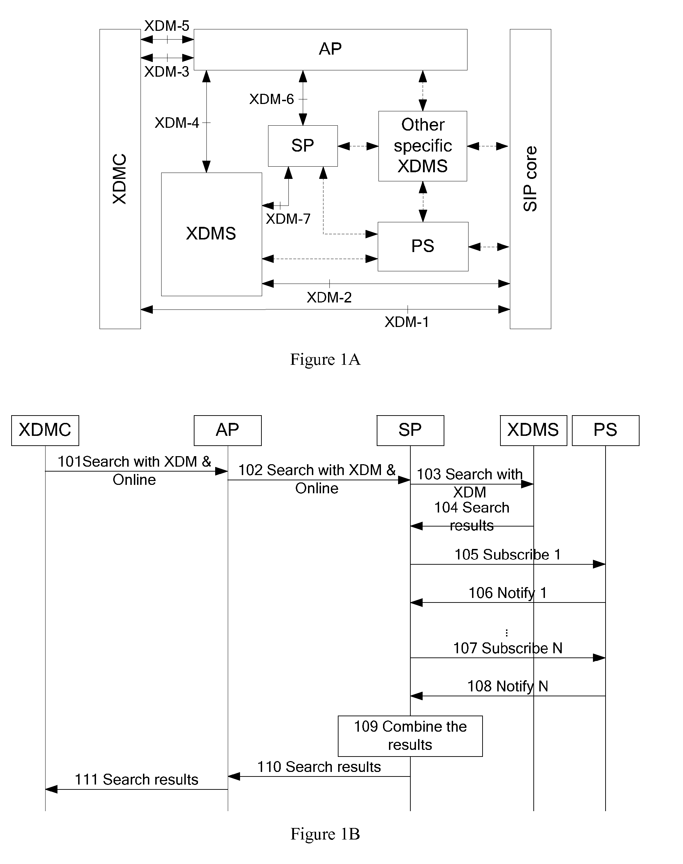

Figure 1A shows the structure of a system for searching for online users according to a first scheme in the prior art. As shown in Figure 1A, the search is based on the OMA architecture in the prior art. The system for searching for online users includes an XDMC, an aggregation proxy (AP), an SP, an XDMS, and a presence server (PS). The XDMC is adapted to send online user search requests to the AP and receive the online user search results forwarded by the AP. The AP is adapted to forward the received online user search requests to the SP and forward the online user search results from the SP to the XDMC. The SP is adapted to request the XDMS to search for users meeting particular conditions, subscribe to the user status information from the PS, determine online users meeting the search conditions, generate online user search results, and send the search results to the AP. The XDMS is adapted to store the basic information of users and provide search results meeting the search conditions to the SP according to the stored basic information of users. The PS is adapted to provide the SP with the online status information of users according to the SUBSCRIBE request from the SP. The basic information of a user may be uniform resource identifier (URI), nickname, age, nationality, region, and sex of the user. Other specific XDMS refers to an XDMS that can perform some special functions.

Figure 1B shows the process of searching for online users according to the first scheme in the prior art. As shown in Figure 1B, the process includes the following steps:
Step 101 to step 102: The XDMC sends an online user search request (Search with XDM & Online) to the AP, with the request carrying search conditions. After receiving the online user search request, the AP forwards the online user search request to the SP.
Step 103 to step 104: After receiving the online user search request, the SP sends a user search request (Search with XDM) to the XDMS, with the request carrying search conditions. After receiving the user search request, the XDMS searches for users meeting the search conditions according to the stored basic information of users, and returns search results to the SP, with the search results carrying the basic information of users meeting the search conditions.
Step 105 to step 108: After receiving the user search results, the SP obtains the user URIs from the basic information of the users, and sends a SUBSCRIBE message to the PS according to the URI of each user. Each SUBSCRIBE message carries a user URI for subscribing to the status information about whether a user is online. After receiving the SUBSCRIBE message, the PS returns a NOTIFY message to the SP, with each NOTIFY message carrying a URI and the status information of a user.
Step 109: After subscribing to the status information of all the users meeting the search conditions, the SP combines the users meeting the search conditions and online users to determine online users meeting the search conditions.
Step 110 to step 111: The SP returns the online user search results to the AP, and the AP forwards the online user search results to the XDMC, with the online user search results carrying the basic information of the users meeting the search conditions or further carrying the online status information of the users.
In the first scheme, the architecture is simple and complies with the OMA architecture in the prior art, in which the interfaces between the function entities do not need to be changed. However, for the online user search requests from each XDMC, the following processes are always required: the XDMS searches for users meeting the search conditions; the SP subscribes to the status information of users from the PS; and the SP parses and combines the results from the XDMSA and the PS. Thus, the whole process is time-consuming, causing low efficiency and long delay in searching for online users and slow response to the XDMC, and affecting the user satisfaction with the services severely.

### Scheme 2

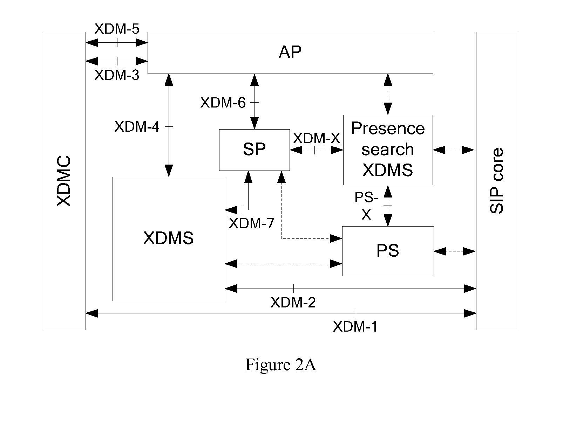

Figure 2A shows the structure of a system for searching for online users according to a second scheme in the prior art. As shown in Figure 2A, a presence search XDMS is configured in the OMA architecture to store user status information. The presence search XDMS is adapted to subscribe to user status information from the PS and handle online user search requests from the SP. The system for searching for online users includes an XDMC, an AP, an SP, an XDMS storing the basic information of users, a PS, and a presence search XDMS. The XDMC is adapted to send online user search requests to the AP and receive the online user search results forwarded by the AP. The AP is adapted to forward the received online user search requests to the SP and the online user search results from the SP to the XDMC. The SP is adapted to request the XDMS storing the basic information of users to search for users meeting the search conditions, request the presence search XDMS to provide the user status information, determine the online users meeting the search conditions, generate online user search results, and send the search results to the AP. The XDMS storing the basic information of users is adapted to store the basic information of users and provide the SP with users meeting the search conditions according to the requests from the SP. The presence search XDMS is adapted to subscribe to the user status information from the PS and store the user status information. The PS is adapted to provide the SP with the status information about whether users are online according to the subscription relation with the presence search XDMS.

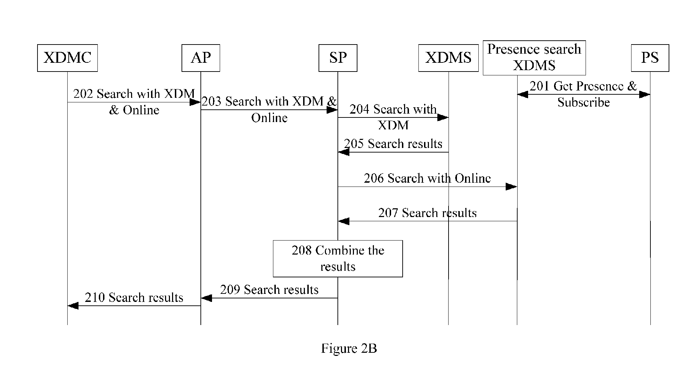

Figure 2B shows the process of searching for online users according to the second scheme in the prior art. As shown in Figure 2B, the process includes the following steps:
Step 201: The presence search XDMS obtains the status information of all users from the PS and stores the status information, obtains the information of users with status changes according to the subscription relation with the PS, and updates the stored user status information according to the status information changes.
Step 202 to step 205 are the same as step 101 to step 104.
Step 206 to step 207: After receiving the user search results, the SP obtains the URIs of users from the basic information of users, and sends an online user search request (Search with Online) to the presence search XDMS, with the request carrying the URI of each user meeting the search conditions. After receiving the online user search request, the presence search XDMS returns the status information of each user meeting the search conditions to the SP according to the URI of each user.
Step 208: After receiving the status information of users provided by the presence search XDMS, the SP combines the users meeting the search conditions and online users to determine online users meeting the search conditions.
Step 209 to step 210 are the same as step 110 to step 111.

In the second scheme, the presence search XDMS for storing user status information is required, which makes the OMA architecture more complex. Besides, the interaction between the PS and the presence search XDMS increases the communication burden on the system. Further, the SP still needs to parse and combine the results from the XDMS and the PS. This generates additional time consumption, thus causing low efficiency and long delay in searching for online users and slow response to the XDMC, and affecting the user satisfaction with the services severely.

### Scheme 3

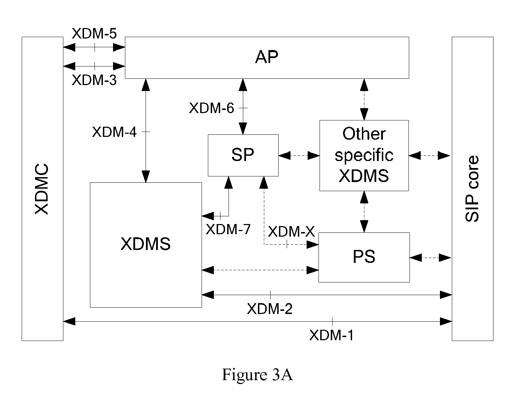

Figure 3A shows the structure of a system for searching for online users according to a third scheme in the prior art. As shown in Figure 3A, a search function is added to the PS in the OMA architecture to return the status information of users to the SP directly according to an online user search request from the SP. The system for searching for online users includes an XDMC, an AP, an SP, an XDMS, and a PS. The XDMC is adapted to send online user search requests to the AP and receive online user search results forwarded by the AP. The AP is adapted to forward the received online user search requests to the SP and forward the online user search results from the SP to the XDMC. The SP is adapted to request the XDMS to search for users meeting the search conditions, request the PS to provide the status information of users, determine the online users meeting the search conditions, generate online user search results, and send the search results to the AP. The XDMS is adapted to store the basic information of users and provide the SP with users meeting the search conditions. The PS is adapted to provide the SP with the status information about whether users are online according to the requests from the SP.

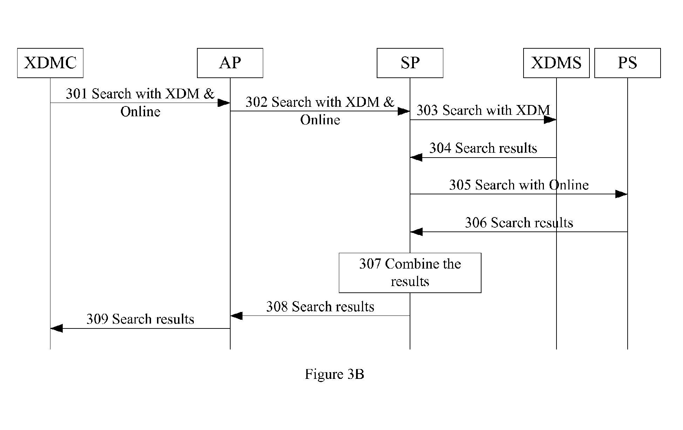

Figure 3B shows the process of searching for online users according to the third scheme in the prior art. As shown in Figure 3B, the process includes the following steps:
Step 301 to step 304 are the same as step 101 to step 104.
Step 305 to step 306: After receiving the user search results, the SP obtains the URIs of users from the basic information of users, and sends an online user search request (Search with Online) to the PS according to the URI of each user, with the request carrying the URI of each user. After receiving the online user search request, the PS returns the status information of each user to the SP according to the URI of each user.
Step 307: After receiving the status information of users provided by the PS, the SP combines the users meeting the search conditions and online users to determine online users meeting the search conditions.
Step 308 to step 309 are the same as step 110 to step 111.
In the third scheme, though the OMA architecture remains unchanged and no new function entity is added, the PS needs to implement the search function, which increases the complexity of the PS. Besides, the SP needs to parse and combine the information from the XDMS and the PS. This generates additional time consumption, thus causing low efficiency and long delay in searching for online users and slow response to the XDMC, and affecting the user satisfaction with the services severely.

The preceding AP and SP are function entities that implement proxy functions in the system.

It is apparent that each scheme mentioned above has its own weaknesses. In each scheme, for each online user search request from the XDMC, the SP needs to interact with the XDMS or the PS, greatly increasing the communication burden of each function entity in the system. In the situation that the online user search request from the XDMC cannot be converged, the information interaction between the function entities becomes more frequent, bringing an unbearable impact on each function entity.

Further, the second and third schemes are only applicable to the scenarios where there are few users and the amount of data exchanged between the function entities is not too large. In actual applications, however, the number of users is huge, and there is a great amount of data of search results. Thus, a large amount of data needs to be transmitted between the SP and the XDMS or the PS; the SP needs to process a large amount of data; and the response to the XDMC is rather slow.

### Summary of the Invention

An embodiment of the present invention provides a method and system for searching for online users to decrease the communication burden of communication systems and make the online user search more efficient and faster.

A method for searching for online users includes:
by an SP, receiving an online user search request from an XDMC, with the request carrying search conditions; and
by the SP, determining online users meeting the search conditions according to the stored basic information and status information of users, and returning search results that carry the basic information of the online users to the XDMC.

A system for searching for online users includes: an XDMC, a storage unit and an SP. The XDMC is adapted to send an online user search request carrying search conditions to the SP and receive search results that carry the basic information of online users meeting the search conditions from the SP. The storage unit is adapted to store the basic information and status information of users. The SP is adapted to receive the online user search request, determine online users meeting the search conditions according to the basic information and status information of users, and provide the XDMC with search results carrying the basic information of online users.

In an embodiment of the present invention, a storage unit is set for the SP. The storage unit is adapted to store the basic information and status information of users. Thus, after receiving an online user search request carrying search conditions from the XDMC, the SP may determine online users meeting the search conditions according to the basic information and status information of users stored in the storage unit, and return the online users meeting the search conditions to the XDMC. Because the storage unit set for the SP stores the basic information and status information of users, the SP does not need to interact with the PS to obtain the status information of users and or interact with the XDMS to obtain the basic information of users after receiving an online user search request from the XDMC. This greatly reduces the frequency of communications between communication entities and the communication burden of each communication entity. Besides, because the storage unit set for the SP stores the basic information and status information of users, the SP does not need to execute steps of parsing and combination. This prevents additional time consumption, improves the efficiency of searching for online users and enables the SP to respond faster to the XDMC, thus raising the user satisfaction with the services.

Further, after processing an online user search request, the SP may buffer the search conditions and online users meeting the search conditions. In this case, if the SP receives another online user search request carrying the same search conditions, the SP directly provides the buffered online users meeting the search conditions to the XDMC that originates the online user search request, making it unnecessary to query the storage unit upon receipt of each online user search request and reducing the number of queries made by the SP in the storage unit.

### Brief Description of the Drawings

Figure 1A shows the structure of a system for searching for online users according to the first scheme in the prior art;
Figure 1B shows the process of searching for online users according to the first scheme in the prior art;
Figure 2A shows the structure of a system for searching for online users according to the second scheme in the prior art;
Figure 2B shows the process of searching for online users according to the second scheme in the prior art;
Figure 3A shows the structure of a system for searching for online users according to the third scheme in the prior art;
Figure 3B shows the process of searching for online users according to the third scheme in the prior art;
Figure 4 shows the structure of a system for searching for online users according to an embodiment of the present invention;
Figure 5A shows the structure of a system according to a first embodiment of the present invention;
Figure 5B shows the flowchart of the first embodiment of the present invention;
Figure 6A shows the structure of a system according to a second embodiment of the present invention;
Figure 6B shows the flowchart of the second embodiment of the present invention;
Figure 7 shows the message interaction process in which the SP subscribes to the status information of users from the PS according to an embodiment of the present invention; and
Figure 8 shows the message interaction process in which the online user search is implemented and search results are buffered according to an embodiment of the present invention.

### Detailed Description of the Invention

In an embodiment of the present invention, a storage unit is set for the SP. The storage unit is adapted to store the basic information and status information of users. Thus, after receiving an online user search request from the XDMC, the SP may determine online users meeting the search conditions according to the basic information and status information of users stored in the storage unit, and return search results that carry the basic information of online users meeting the search conditions to the XDMC.

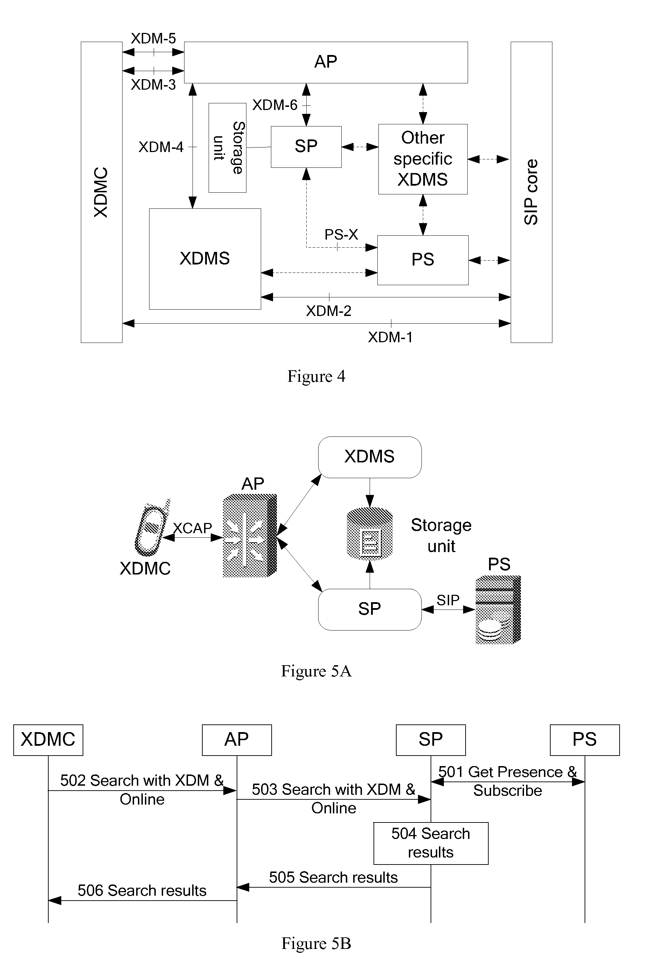

Figure 4 shows the structure of a system for searching for online users according to an embodiment of the present invention. As shown in Figure 4, the system includes an XDMC, an AP, an SP, an XDMS, a storage unit, and a PS. The XDMC is adapted to send an online user search request to the AP and receive online user search results forwarded by the AP. The AP is adapted to forward the received online user search request to the SP and forward the online user search results from the SP to the XDMC. The SP is adapted to obtain the status information of users according to subscription relation with the PS, store the obtained status information of users in the storage unit, determine online users meeting the search conditions according to the basic information and status information of users stored in the storage unit after receiving the online user search request from the XDMC, and return search results that carry the basic information of online users meeting the search conditions to the AP. The storage unit is adapted to store the basic information and status information of users. The XDMS is adapted to store the basic information of users in the storage unit. A same storage unit may be set for the XDMS and the SP. In this case, the storage unit in Figure 4 is shared by the SP and the XDMS, and stores the basic information of users and the status information of users that is obtained by the SP through the interaction with the PS. Besides, different storage units may be set for the XDMS and the SP. In this case, the storage unit in Figure 4 is set for the SP only, and the storage unit set for the XDMS stores the basic information of users, such as URI, nickname, age, nationality, region, and sex. The SP obtains the basic information of users through the interaction with the XDMS and stores such information in the storage unit set for the SP. The SP is connected to the XDMS, for example, via an interface. Moreover, the SP obtains the status information of users through the interaction with the PS and stores the status information in the storage unit set for the SP. The XDMC communicates with the AP according to the XML Configuration Access Protocol (XCAP), and the SP communicates with the PS according to the Session Initiation Protocol (SIP).

Because the SP should subscribe to the status information about whether all the users are online from the PS, the interface between the SP and the PS may be set to PS-X so that the SP can subscribe to the status information of all the users.

Figure 5A shows the structure of a system according to the first embodiment of the present invention. As shown in Figure 5A, the system includes an XDMC, an AP, an SP, an XDMS, a storage unit, and a PS. The SP and the XDMS share a same storage unit, that is, a same storage unit is set for the SP and the XDMS. Thus, the storage unit stores the basic information and status information of users, where the status information of users is obtained by the SP through the interaction with the PS. The XDMS may add, change or delete the basic information of users in the storage unit, for example, the XDMS may add the basic information items of users or add users. The SP may update the status information of users in the storage unit according to the current online information of users provided by the PS.

Figure 5B shows the flowchart of the first embodiment of the present invention. As shown in Figure 5B, the process of searching for online users includes the following steps:
Step 501: The SP obtains the status information of all the users (Get Presence & Subscribe) and stores the status information of users in the storage unit. The SP may actively obtain the status information of all the users from the PS; or to ensure the real-time nature of the status information of users in the storage unit, the PS may actively notify changes of status information of users to the SP according to the subscription relation between the SP and the PS, so that the SP can timely know the status changes of users and then update the status information of users in the storage unit according to such changes. To prevent frequent interactions between the PS and the SP, the PS may provide the SP with the changed status information of users when the current conditions meet preset conditions. For example, the PS provides the SP with the changed status information of users when a preset timer expires or the number of users with status changes reaches a preset threshold. The SP updates the status information of users in the storage unit according to the received status information of users. Besides, the SP may periodically request the current status information of users from the PS, and then update the status information of users in the storage unit according to the status information of users provided by the PS so as to ensure the real-time nature of the status information of users in the storage unit.
Step 502 to step 503: The XDMC sends an online user search request (Search with XDM & Online) to the AP, where the request carries search conditions. After receiving the online user search request, the AP forwards the online user search request to the SP.
Step 504: After receiving the online user search request, the SP searches for users and determines online users meeting the search conditions according to the basic information and status information of users in the storage unit.
Step 505 to step 506: The SP returns the online user search results to the AP, and the AP forwards the online user search results to the XDMC, where the online user search results carry the basic information and status information of online users meeting the search conditions.

The XDMS stores the changed basic information of users in the storage unit when the basic information of users changes. This may effectively ensure the real-time nature of the basic information of users in the storage unit.

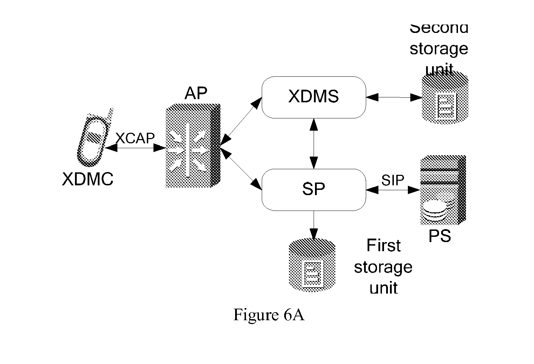

Figure 6A shows the structure of a system according to the second embodiment of the present invention. As shown in Figure 6A, the system includes an XDMC, an AP, an SP, an XDMS, a PS, a first storage unit set for the SP, and a second storage unit set for the XDMS, where the second storage unit stores the basic information of users. The first storage unit stores the basic information and status information of users. The basic information of users is obtained by the SP through interaction with the XDMS, and the status information of users is obtained by the SP through the interaction with the PS.

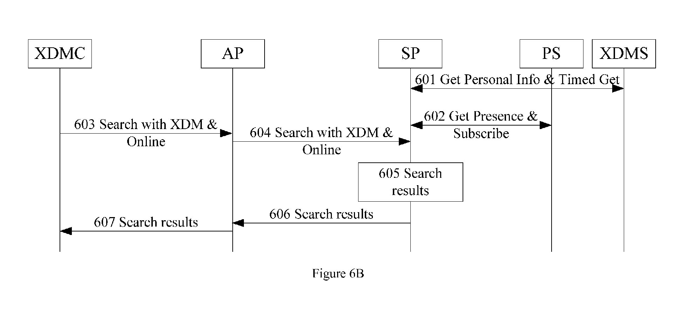

Figure 6B shows the flowchart of the second embodiment of the present invention. As shown in Figure 6B, the process of searching for online users includes the following steps:
Step 601: The SP obtains the basic information of all the users (Get Personal Info & Timed Get) from the XDMS and stores the basic information of users in the first storage unit. The SP may actively obtain the basic information of all the users from the XDMS; or to ensure the real-time nature of the basic information of users in the first storage unit, the XDMS may actively notify changes of basic information of users to the SP, so that the SP can timely know the changes of the basic information of users and then update the basic information of users in the first storage unit according to such changes. To prevent frequent interactions between the XDMS and the SP, the XDMS may provide the SP with the changed basic information of users when the current conditions meet preset conditions. For example, the XDMS provides the SP with the changed basic information of users when a preset timer expires or the number of users with basic information changes reaches a preset threshold, or when a preset timer expires or the number of users with status changes reaches a preset threshold. The SP updates the basic information of users in the first storage unit according to the received basic information of users. Besides, the SP may periodically request the current basic information of users from the XDMS, and then update the basic information of users in the first storage unit according to the basic information of users provided by the XDMS so as to ensure the real-time nature of the basic information of users in the first storage unit.
Step 602 is the same as step 501.
Step 601 may be executed before or after step 602, or step 601 and step 602 may be executed concurrently.
Step 603 to step 607 are the same as step 502 to step 506.

Further, in the preceding two embodiments, after processing an online user search request, the SP may buffer the search conditions and the search results carrying the basic information of online users meeting the search conditions. In this case, if the SP receives another online user search request carrying the same search conditions, the SP directly provides the buffered search results that carry the basic information of online users meeting the search conditions to the XDMC that originates the online user search request, making it unnecessary to query the storage unit upon receipt of each online user search request and reducing the number of queries by the SP in the storage unit. A limit may be set to prevent the amount of buffered data from growing too large. For example, a parameter may be set to limit the amount of buffered data, or a validity period may be set, and when the period for buffering search results under a certain search condition is longer than the validity period, the search results are discarded.

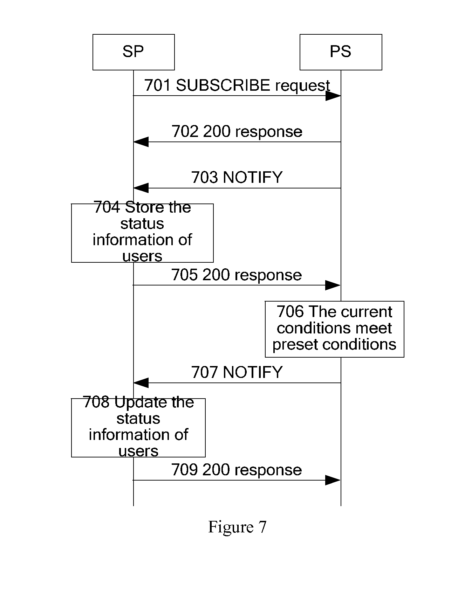

Figure 7 shows the message interaction process in which the SP subscribes to the status information from the PS according to an embodiment of the present invention. As shown in Figure 7, the message interaction process includes the following steps:
Step 701 to step 702: The SP sends a SUBSCRIBE request to the PS for subscribing to the status information of users. After receiving the SUBSCRIBE request, the PS returns a 200 response (200OK) to the SP.
Step 703 to step 705: The PS sends a NOTIFY message to the SP, where the notification message carries the status information of all the users. After receiving the NOTIFY message, the SP stores the status information of users in the storage unit set for the SP, and returns a 200 response to the PS.

To ensure the real-time nature of the status information of users in the storage unit set for the SP, the PS needs to provide the SP with the current status information of users. This may be performed when the current conditions meet preset conditions so as to prevent frequent interactions between the PS and the SP and reduce the communication burden of the system. See step 706 to step 707 for details.

Step 706 to step 707: When the current conditions meet preset conditions, the PS sends a NOTIFY message to the SP, with the NOTIFY message carrying the changed status information of users. Whether the current conditions meet preset conditions may be controlled according to time or number of users. For example, when the preset time expires, the current conditions meet preset conditions, and the PS provides the SP with the changed status information of users; when the number of users with status changes reaches a preset value, the current conditions meet preset conditions, and the PS provides the SP with the changed status information of users. Besides, whether the current conditions meet preset conditions may be controlled by combining the preceding modes. For example, when the preset timer expires or the number of users with status changes reaches a preset value, the current conditions meet preset conditions, and the PS provides the SP with the changed status information of users.

Step 708 to step 709: After receiving the NOTIFY message, the SP updates the status information of users in the storage unit set for the SP, and returns a 200 response to the PS.

The PS may actively provide the SP with the changed status information of users in the preceding mode. In fact, the SP may also periodically send a request to the PS for the changed status information of users. Upon receipt of the request, the PS periodically provides the SP with the changed status information of users.

The SP may subscribe to the status information of users through a user-defined interface or by using an extended group subscription mode. For example, all the users are set to a group, and the SP subscribes to the status information of all the users in the group from the PS. Besides, The SP may subscribe to the status information of each user. For example, the SP uses a resource list server (RLS) to subscribe to the status information of each user from the PS, that is, the SP subscribes to the status information of each user from the PS through the RLS.

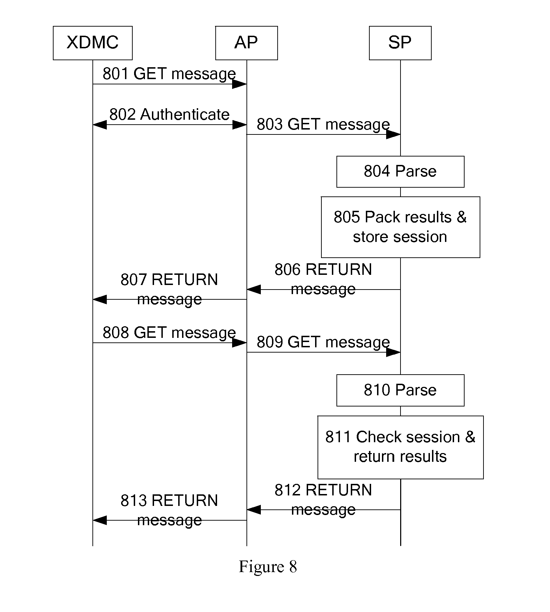

Figure 8 shows the message interaction process in which online user search is implemented and search results are buffered according to an embodiment of the present invention. As shown in Figure 8, the message interaction process includes the following steps:
Step 801: The XDMC sends a GET message carrying search conditions to the AP to request searching for online users meeting the search conditions.
Step 802 to step 803: The AP authenticates the XDMC. After the XDMC is authenticated, the AP forwards the GET message from the XDMC to the SP, with the GET message carrying the search conditions.
Step 804 to step 805: After receiving the GET message, the SP parses the search conditions and determines online users meeting the search conditions according to the basic information and status information of users in the storage unit set for the SP. The determined online users meeting the search conditions may be only some of the online users meeting the search conditions. For example, the SP searches out a preset number of online users. When returning search results to the XDMC, the SP may return the basic information of only some of the searched out online users that meet the search conditions. In this case, the SP encapsulates the information of some online users, and stores the current session. The current session includes search conditions and search results that carry the basic information of online users meeting the search conditions.
Step 806 to step 807: The SP sends a RETURN message to the AP, with the RETURN message carrying the encapsulated search results. After receiving the RETURN message, the AP forwards the RETURN message to the XDMC.
Step 808 to step 809: The XDMC sends a GET message to the AP, and the GET message carries the same search conditions as those in step 801. After receiving the GET message, the AP forwards the GET message to the SP.
Step 810 to step 813: After receiving the GET message, the SP parses the search conditions, and determines that the search conditions are the same as those stored in the session through comparison. Because the SP has buffered search results that carry the basic information of online users meeting the search conditions, the SP only needs to provide the buffered search results to the XDMC, without the necessity of searching the storage unit for online users meeting the search conditions. Thus, the SP encapsulates the search results, and then sends a RETURN message to the AP, with the RETURN message carrying the encapsulated search results. After receiving the RETURN message, the AP forwards the RETURN message to the XDMC.

What has been described is the processing of online user search requests originated by the same XDMC with the same search conditions. In actual applications, after the SP buffers search results under certain search conditions, if another XDMC originates an online user search request with the same search conditions, the SP provides the buffered search results to the XDMC.

Besides, the SP may return a fixed number of online users meeting the search conditions to the XDMC each time. The fixed number of online users may be specified by the XDMC or set by the SP so as to prevent the amount of data exchanged between the SP and the XDMC from growing too large. This may effectively avoid insufficient processing capacity of the XDMC when the number of searched out online users that meet the search conditions is very huge.

If an online user search request originated by the XDMC carries search conditions only, when the SP returns search results to the XDMC, the SP may further provide additional information to the XDMC. For example, the SP determines a random number according to the number of searched out online users that meet the search conditions, returns the basic information of M online users meeting the search conditions and starting from the random number to the XDMC, and provides the XDMC with the random number and the total number of pages. In the subsequent process, if the XDMC originates an online user search request with the same search conditions, the SP may provide search results according to the requirement for additional information. For example, the SP is required to return online users meeting the search conditions on page L, or return the basic information of online users meeting the search conditions on page K starting from the random number.

Further, an online user search request originated by the XDMC may further carry additional information. The SP determines search results meeting the additional information among the searched out online users that meet the search conditions, and provides the search results to the XDMC. Through the additional information, the SP may return the search results that carry the basic information of online users meeting the search conditions randomly. For example, if an online user search request originated by the XDMC carries a random number, after determining online users meeting the search conditions, the SP returns search results that carry the basic information of all or certain online users meeting the search conditions after the random number. For example, if an online user search request originated by the XDMC carries a random number and a page, after determining online users meeting the search conditions, the SP, according to the random number and page, returns search results that carry the basic information of all or certain online users meeting the search conditions after the random number on page N or search results that carry the basic information of online users meeting the search conditions starting from the random number on page N.

Although the invention has been described through some exemplary embodiments, the invention is not limited to such embodiments. It is apparent that those skilled in the art can make various modifications and variations to the present invention without departing from the spirit and scope of the present invention. The present invention is intended to cover these modifications and variations provided that they fall in the scope of protection defined by the following claims or their equivalents.

## Claims

1. A method for searching for online users, comprising:
by a search proxy (SP), receiving an online user search request from an XML document management client (XDMC), with the request carrying search conditions; and
by the SP, determining online users meeting the search conditions according to the stored basic information and status information of users, and returning search results carrying the basic information of the online users to the XDMC.

2. The method of claim 1, wherein a storage unit is set for the SP to store the basic information and status information of the users.

3. The method of claim 2, further comprising:
by the SP, obtaining the basic information of users through the interaction with an XML document management server (XDMS), and storing the basic information of users in the storage unit.

4. The method of claim 3, further comprising:
if the current conditions meet preset conditions, by the XDMS, providing the SP with the changed basic information of users; and by the SP, updating the basic information of users in the storage unit according to the received basic information of users; or
by the SP, requesting the current basic information of users from the XDMS periodically, and updating the basic information of users in the storage unit according to the basic information of users provided by the XDMS.

5. The method of claim 4, wherein the current conditions may be: a preset timer expires; or the number of users with basic information changes reaches a preset value; or a combination thereof.

6. The method of claim 1, wherein a storage unit is shared by the SP and the XDMS and adapted to store the basic information and status information of the users.

7. The method of claim 1, 2 or 6, further comprising:
by the SP, obtaining the status information of users through the interaction with a presence server (PS), and storing the status information of users in the storage unit.

8. The method of claim 7, further comprising:
if the current conditions meet preset conditions, by the PS, providing the SP with the changed status information of users; and by the SP, updating the status information of users in the storage unit according to the received status information of users; or
by the SP, requesting the current status information of users from the PS periodically, and updating the status information of users in the storage unit according to the status information of users provided by the PS.

9. The method of claim 8, wherein the current conditions may be: a preset timer expires; or the number of users with status information changes reaches a preset value; or a combination thereof.

10. The method of claim 1, 2 or 6, wherein after the SP determines online users meeting the search conditions according to the stored basic information and status information of users, and returns search results about the online users to the XDMC, the method further comprises: by the SP, storing the search conditions and the search results that carry the basic information of online users meeting the search conditions, and after receiving an online user search request carrying the search conditions, providingafter receiving an online user search request carrying the search conditions, the stored search results that carry the basic information of online users meeting the search conditions to the XDMC that originates the online user search request.

11. A system for searching for online users, comprising an XML document management client (XDMC), a storage unit, and a search proxy, wherein:
the XDMC is adapted to send online user search requests that carry search conditions to the SP, and receive search results that carry the basic information of online users meeting the search conditions from the SP;
the storage unit is adapted to store the basic information and status information of users; and
the SP is adapted to receive the online user search requests, determine online users meeting the search conditions according to the basic information and status information of users, and provide the XDMC with search results that carry the basic information of the online users.

12. The system of claim 11, further comprising an XML document management server (XDMS), wherein the storage unit is shared by the SP and the XDMS.

13. The system of claim 11, further comprising an XDMS and a second storage unit set for the XDMS, wherein:
the second storage unit is adapted to store the basic information of users;
the XDMS is adapted to provide the SP with the basic information of users; and
the SP is further adapted to store the basic information of users in the storage unit.

14. The system of any of claims 11 to 13, further comprising a presence server (PS), wherein:
the PS is adapted to provide the SP with the status information of users; and
the SP is further adapted to store the status information of users in the storage unit.

15. The system of any of claims 11 to 13, wherein the SP is further adapted to: store search conditions and search results that carry the basic information of online users meeting the search conditions; and after receiving an online user search request that carries the search conditions, provide the stored search results that carry the basic information of online users meeting the search conditions to the XDMC that originates the online user search request.
